# EUROPÄISCHE PATENTSCHRIFT

(11) **EP 3 246 208 B1**
(45) Veröffentlichungstag und Bekanntmachung des Hinweises auf die Patenterteilung: **24.02.2021**
(21) Anmeldenummer: 16169928.5
(22) Anmeldetag: 17.05.2016
(51) Int. Cl.: B60Q 1/30, B60Q 11/00

(54) **VERFAHREN ZUR ZEITWEISEN BESTROMUNG VON LEUCHTEN**
METHOD FOR TEMPORARY ENERGIZING OF LIGHTS
PROCEDE D'ALIMENTATION ELECTRIQUE TEMPORAIRE D'ECLAIRAGES

(43) Veröffentlichungstag der Anmeldung: 22.11.2017
(73) Patentinhaber: ConWys AG, 6023 Rothenburg (CH)
(72) Erfinder: Wystron, Alexander, 6005 Luzern (CH)
(74) Vertreter: Rausch Wanischeck-Bergmann Brinkmann

(56) Entgegenhaltungen:
- WO-A1-2016/142391
- DE-A1- 10 243 792
- DE-A1-102006 018 813
- GB-A- 2 515 869

## Beschreibung

Die Erfindung betrifft ein Verfahren zur zeitweisen Bestromung von Leuchten eines an ein Zugfahrzeug elektrisch angeschlossenen Anhängers.

Für den elektrischen Anschluss eines Anhängers, das heißt dessen elektrische Anlage an das Stromnetz eines Zugfahrzeugs dienen sogenannte Anhängeranschlussgeräte, wie sie zum Beispiel aus der EP 2 374 637 B1, der EP 2 377 723 A1 und der EP 1 886 848 A1 bekannt sind. Anhängeranschlussgeräte der vorbekannten Art verfügen vorzugsweise über eine Schaltungseinheit zur Selbstdiagnose, was es gestattet, die ordnungsgemäße Funktion des Anhängeranschlussgerätes sowie den ordnungsgemäßen Anschluss der elektrischen Anlage des Anhängers an das Anhängeranschlussgerät zu detektieren. Sollte das Anhängeranschlussgerät defekt sein oder ein nicht ordnungsgemäßer Anschluss der elektrischen Anlage des Anhängers an das Anhängeranschlussgerät vorliegen, so wird dies dem Verwender optisch und/oder akustisch angezeigt.

Es ist des Weiteren aus der DE 102 43 792 A1 ein Inspektionssystem für eine Fahrzeugleuchte bekannt. Gemäß diesem System findet ein Gerät zum Testen von externen Fahrzeugleuchten Verwendung, das über einen programmierbaren Fahrzeug-Controller mit Ausgangselementen zum Zuführen von Strom zu den externen Fahrzeugleuchten ausgestattet ist. Verwenderseitig ist die Aktivierung einer Lampentestroutine dadurch zu starten, indem die Zündung des Fahrzeugs eingeschaltet wird.

Aus der GB 2,515,869 A ist ein Verfahren zur Lampen- und Bremssystemüberprüfung bei Fahrzeugen bekannt.

Die nachveröffentlichte WO 2016/14239 A1 offenbart eine Testsequenz zur Überprüfung der Funktionstüchtigkeit von Leuchten eines aus einem Zugfahrzeug und einem Anhänger gebildeten Fahrzeuggespanns. Zur Auslösung dieser Testsequenz ist ein verwenderseitig zu betätigender Schalter vorgesehen, der nach einem Anschluss des Anhängers an das Zugfahrzeug zu betätigen ist. Dabei beinhaltet die Testsequenz ein Aufleuchten sowohl der Anhängerleuchten als auch der Zugfahrzeugleuchten, was es gestattet, die Synchronität der Leuchten des Anhängers und der des Zugfahrzeugs mit überprüfen zu können.

Die aus dem Stand der Technik vorbekannte Selbstdiagnose eines Anhängeranschlussgerätes befreit den Verwender aber nicht davon, sich nach einem ordnungsgemäßen Anschluss der elektrischen Anlage des Anhängers an das Anhängeranschlussgerät selbst von einem ordnungsgemäßen Betrieb der elektrischen Anlage des Anhängers, insbesondere der Funktionstüchtigkeit der anhängerseitigen Leuchten zu überzeugen. Es ist die **Aufgabe** der Erfindung, dem Verwender eine diesbezügliche Hilfestellung zum Zwecke der vereinfachten Handhabung bereitzustellen.

Zur **Lösung** dieser Aufgabe wird mit der Erfindung vorgeschlagen ein Verfahren zur zeitweisen Bestromung von Leuchten eines an ein Zugfahrzeug elektrisch angeschlossenen Anhängers gemäß Anspruch 1.

Die erfindungsgemäße Verfahrensdurchführung ermöglicht einen automatisierten Selbsttest der anhängerseitigen Beleuchtungsanlagen. Die einzelnen Leuchten des Anhängers werden der Reihe nach bestromt, so dass sie für einen Augenblick aufleuchten. Es wird eine Bestromung sämtlicher Leuchten automatisch vorgenommen, und zwar aufeinander nachfolgend einzeln, womit es verwenderseitig gestattet ist, durch eine einfach durchzuführende visuelle Kontrolle die Funktionstüchtigkeit der anhängerseitigen Leuchtenanlage zu prüfen.

Die erfindungsgemäße Verfahrensdurchführung kann verwenderseitig ohne Hilfestellung einer zweiten Person durchgeführt werden. In Abkehr zur üblichen Vorgehensweise bedarf es also keiner zweiten Person, die die Funktionstüchtigkeit der anhängerseitigen Leuchte im Moment der verwenderseitigen Einschaltung prüft. Insbesondere die Funktionstüchtigkeit der Bremsleuchten lässt sich gemäß dem Stand der Technik nur durch den Verwender allein nicht oder nicht hinreichend prüfen, so dass es der Unterstützung durch eine zweite Person bedarf. Die erfindungsgemäße Verfahrensdurchführung schafft hier Abhilfe, denn es erfolgt eine Einzelbestromung der anhängerseitigen Leuchten der Reihe nach, was es einem Verwender gestattet, die Leuchten des Anhängers nach erfolgtem Start des erfindungsgemäßen Verfahrens selbst in Augenschein zu nehmen.

Es ist gemäß einem ersten Verfahrensschritt vorgesehen, dass eine Leuchtenbestromung initialisiert wird. Gemäß diesem ersten Verfahrensschritt erfolgt eine Systemvorbereitung, das heißt es erfolgt eine eineindeutige Kenntlichmachung einer im nachfolgenden durchzuführenden Testsequenz, innerhalb welcher die Leuchten des Anhängers kurzzeitig eingeschaltet werden.

Nachdem die Leuchtenbestromung initialisiert ist, werden die Leuchten des Anhängers an die Stromversorgung des Zugfahrzeugs angeschlossen. Dies geschieht in erfindungsgemäßer einfacher Weise dadurch, dass die elektrische Anlage des Anhängers an das zugfahrzeugseitige Anhängeranschlussgerät angeschlossen wird. Dies geschieht typischerweise dadurch, dass der anhängerseitige Anschlussstecker in die dafür am Zugfahrzeug vorgesehene Steckdose eingesteckt wird.

Sobald der elektrische Anschluss gegeben ist, wird aufgrund der zuvor durchgeführten Initialisierung eine Testsequenz automatisch durchgeführt. Dabei werden die Leuchten des Anhängers der Reihe nach einzeln für ein vorgebbares Zeitintervall bestromt. Infolge dieser Bestromung leuchte die Leuchten des Anhängers auf, was der Verwender für eine Funktionsüberprüfung in Augenschein nehmen kann.

Nach einem Aufleuchten der als letzte zu bestromenden Leuchte des Anhängers ist die Testsequenz beendet und das erfindungsgemäße Verfahren ist abgeschlossen. Für eine erneute Verfahrensdurchführung ist der Anhänger zunächst vom Zugfahrzeug elektrisch zu trennen, so dass dann im nachfolgenden die vorstehend beschriebenen Verfahrensschritte der Reihe nach erneut durchgeführt werden können.

Es ist gemäß einem weiteren Merkmal der Erfindung vorgesehen, dass das Zeitintervall zwischen 1 Sekunde und 2 Sekunden, vorzugsweise 1,5 Sekunden beträgt. Innerhalb dieses Zeitintervalls findet eine Bestromung der entsprechenden Leuchte des Anhängers statt, das heißt die Leuchte leuchtet für ca. 1 Sekunde bis 2 Sekunden auf, so dass einem Verwender hinreichend Zeit bleibt, die Funktionstüchtigkeit der entsprechenden Leuchte sicher feststellen zu können.

Gemäß einem weiteren Merkmal der Erfindung ist vorgesehen, dass zwischen zwei aufeinander nachfolgenden Leuchtenbestromungen ein Pausenintervall von 0,2 Sekunden bis 1,0 Sekunden, vorzugsweise 0,5 Sekunden vorgesehen ist. Das Pausenintervall bewirkt eine zeitliche Differenzierung, so dass es verwenderseitig in einfacher Weise wahrgenommen werden kann, dass eine vorangegangene Leuchtenbestromung nunmehr beendet ist und die Bestromung einer anderen Leuchte nunmehr kurz bevorsteht. Der Verwender kann sich mithin auf die bevorstehende Leuchtenbestromung vorbereiten, was es insgesamt vereinfacht, einer Testsequenz aufmerksamer folgen zu können.

Es ist gemäß einem weiteren Merkmal der Erfindung vorgesehen, das die Initialisierung der Bestromung mittels Betätigung eines im Fahrgastraum des Zugfahrzeugs angeordneten Auslöseelements erfolgt. Durch diese Verfahrensmaßnahme ergibt sich eine besonders vereinfachte Handhabung. Der sich zur Einschaltung der zugfahrzeugseitigen Stromversorgung ohnehin im Zugfahrzeug befindliche Verwender kann durch Betätigung des dafür vorgesehenen Auslöseelements die nach der erfindungsgemäßen Verfahrensdurchführung vorgesehen Initialisierung der Leuchtenbestromung starten, bevor er das Zugfahrzeug verlässt, um die anhängerseitige elektrische Anlage in bestimmungsgemäßer Weise an die Stromversorgung des Zugfahrzeuges anzuschließen. Der Anschluss des Anhängers wird vom Anhängeranschlussgerät erkannt und aufgrund der zuvor bereits verwenderseitig gestarteten Initialisierung wird die Testsequenz in erfindungsgemäßer Weise automatisch durchgeführt.

Als Auslöseelement wird vorzugsweise der für eine Bedienung der Warnblinkeinrichtung des Zugfahrzeugs ohnehin vorgesehene Betätigungsschalter verwendet. Die Initialisierung der Leuchtenbestromung erfolgt mithin dadurch, dass verwenderseitig die Warnblinkeinrichtung des Zugfahrzeugs eingeschaltet wird.

Die Nutzung eines ohnehin schon vorgesehenen Betätigungsschalters als Auslöseelement ist insofern von Vorteil, als dass es eines ergänzenden Eingriffs in die zugfahrzeugseitige Elektrik zwecks Installation eines Anhängeranschlussgerätes nicht bedarf. Insoweit mag es zwar auch möglich sein, ein Anhängeranschlussgerät selbst mit einem Auslöseelement auszurüsten, doch ist eine solche Variante mit dem Nachteil verbunden, dass nur eine umständliche Handhabung möglich ist. Denn das Anhängeranschlussgerät wird typischerweise im Kofferraum eines Zugfahrzeugs montiert, so dass ein Verwender für die Durchführung einer nach dem erfindungsgemäßen Verfahren vorgesehenen Initialisierung zunächst den Kofferraum zu öffnen hätte. Insoweit ist die mit der Erfindung vorgeschlagene Ausgestaltung sehr viel komfortabler. Hinzu kommt ein durch die erfindungsgemäße Ausgestaltung gegebener synergetischer Effekt. So bewirkt die Betätigung der zugfahrzeugseitigen Warnblinkeinrichtung nicht nur eine Initialisierung des erfindungsgemäßen Verfahrens, es werden auch andere Verkehrsteilnehmer durch die eingeschaltete Warnblinkanlage darüber unterrichtet, dass das Zugfahrzeug steht und erhöhte Vorsicht geboten ist.

Es ist gemäß einem weiteren Merkmal der Erfindung vorgesehen, dass nach einem Anschluss der Leuchten an die zugfahrzeugseitige Stromversorgung eine Bestromung der ersten Leuchte nach Ablauf eines Warteintervalls von 1 Sekunde bis 10 Sekunden, vorzugsweise von 5 Sekunden durchgeführt wird. Die Testsequenz beginnt mithin nicht im Augenblick des Anschlusses des Anhängers an die zugfahrzeugseitige Stromversorgung, sondern es ist vielmehr ein Warteintervall vorgesehen, wobei erst nach dessen Ablauf die erfindungsgemäße Testsequenz durchgeführt wird. Verwenderseitig bleibt mithin hinreichend Zeit, nach einem bestimmungsgemäßen Anschluss des Anhängers an das Zugfahrzeug hinter den Anhänger zu treten, um so die anhängerseitigen Leuchten in Augenschein zu nehmen.

Es ist gemäß einem weiteren Merkmal der Erfindung vorgesehen, dass eine Bestromung der Leuchten in einer vorgegebenen Reihenfolge automatisch durchgeführt wird. Die Prüfreihenfolge ist dabei stets identisch, so dass es einem Verwender vereinfacht ist, der Testsequenz folgen zu können.

Gemäß einem weiteren Merkmal der Erfindung wird eine Bestromung der Leuchten bei erneuter Betätigung der Auslöseelements unterbrochen. Der erfindungsgemäße Verfahrensablauf kann mithin verwenderseitig abgebrochen werden. Dies bevorzugterweise dadurch, dass das zur Initialisierung zu betätigende Auslöseelement wiederholt betätigt wird. Gemäß der bevorzugten Ausführungsform der Erfindung erfolgt dies durch Ausschalten der zugfahrzeugseitigen Warnblinkeinrichtung.

Ein Verfahrensabbruch kann gemäß einer alternativen Ausführungsform auch dadurch bewirkt werden, dass ein anderes als das zur Initialisierung vorgesehene Auslöseelement betätigt wird, beispielsweise durch das manuelle Einschalten einer zug- und/oder anhängerseitigen Leuchte oder durch ein Bedienen des zugfahrzeugseitigen Bremspedals.

Mit der erfindungsgemäßen Verfahrensdurchführung wird es einem Verwender eines Anhängers in einfacher Weise gestattet, eine Prüfung der anhängerseitigen Leuchten auf ordnungsgemäße Funktionstüchtigkeit durch optische Inaugenscheinnahme selbst und ohne Hilfestellung durch eine weitere Person durchführen zu können. Unabhängig von einer solchen optischen Überprüfung kann ergänzend auch eine elektronische Funktionsprüfung durchgeführt werden, wobei im Falle eines detektierten Defekts eine entsprechende Anzeige im Zugfahrzeug anspringt. Die visuelle Überprüfung durch den Verwender selbst ist aber unerlässlich, um etwaigen Elektronikfehlern sicher begegnen zu können.

Weitere Merkmale und Vorteile der Erfindung ergeben sich aus der nachfolgenden Beschreibung anhand der Figuren. Dabei zeigen
- Fig. 1: in rein schematischer Blockdarstellung die erfindungsgemäße Verfahrensdurchführung und
- Fig. 2: ebenfalls in rein schematischer Blockdarstellung die beispielhafte Durchführung einer Testsequenz.

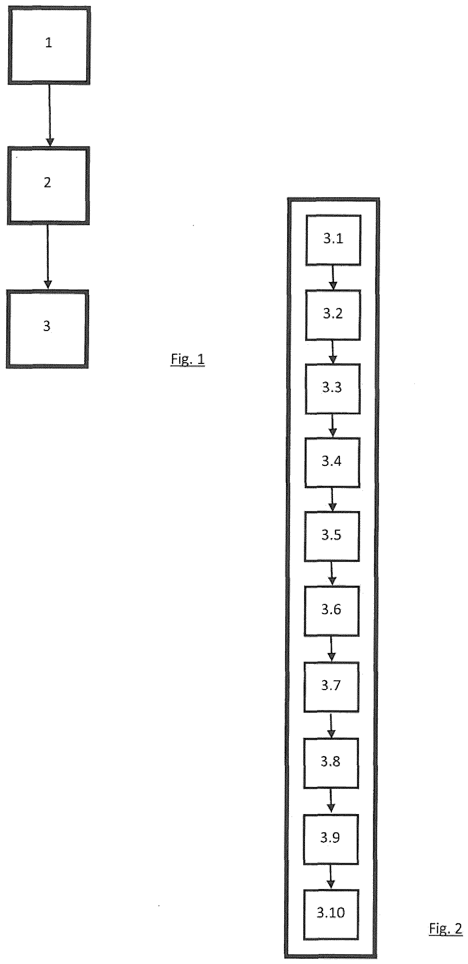

Wie sich anschaulich aus der Blockdarstellung nach Fig. 1 ergibt, erfasst die erfindungsgemäße Verfahrensdurchführung drei wesentliche Schritte. Gemäß einem ersten Schritt 1 wird eine Leuchtenbestromung initialisiert. Dies geschieht bevorzugterweise dadurch, dass verwenderseitig die Warnblinkeinrichtung des Zugfahrzeuges eingeschaltet wird.

Alsdann erfolgt gemäß einem zweiten Verfahrensschritt 2 der elektrische Anschluss der anhängerseitigen elektrischen Anlage an die Stromversorgung des Zugfahrzeugs. Dies geschieht in an sich bekannter Weise dadurch, dass der anhängerseitige Stecker in die dafür vorgesehene Steckdose des Zugfahrzeugs eingeführt wird.

Gemäß einem dritten Verfahrensschritt 3 erfolgt dann die eigentliche Testsequenz, dergemäß die Leuchten des Anhängers der Reihe nach einzeln für ein vorgegebenes Zeitintervall bestromt werden. Ein solches Zeitintervall dauert beispielsweise 1,5 Sekunden. Zwischen zwei Bestromungsintervallen liegt bevorzugterweise ein Pausenintervall von 0,5 Sekunden.

Infolge der zeitweisen Bestromung leuchten die entsprechenden Leuchten kurz auf, was verwenderseitig durch einfache Inaugenscheinnahme wahrgenommen werden kann. Unterbleibt ein solches Aufleuchten, so liegt ein entsprechender Defekt vor, sei es hinsichtlich des Leuchtmittels, der Verkabelung und/oder des elektrischen Anschlusses. Eine ordnungsgemäße Funktionstüchtigkeit der entsprechenden Leuchte liegt jedenfalls nicht vor. Dies wird verwenderseitig ohne weiteres erkannt, was eine sofortige Instandsetzung ermöglicht.

Eine beispielhafte Testsequenz ist gemäß dem Blockdiagramm nach Figur 2 dargestellt.

Nach einem ordnungsgemäßen Anschluss des Anhängers an die Stromversorgung des Zugfahrzeugs ist gemäß Verfahrensschritt 3.1 ein Warteintervall von zum Beispiel 5 Sekunden vorgesehen. Nach Ablauf dieses Warteintervalls erfolgt gemäß Verfahrensschritt 3.2 eine Bestromung der Standleuchten des Anhängers, und zwar für eine Bestromungsdauer von 1,5 Sekunden. Diesem Bestromungsintervall folgt gemäß Verfahrensschritt 3.3 ein Pausenintervall von 0,5 Sekunden.

Gemäß der weiteren Verfahrensschritte 3.4 bis 3.10 erfolgt eine Bestromung der weiteren Leuchten des Anhängers, jeweils für 1,5 Sekunden sowie jeweils gefolgt von einem Pausenintervall von je 0,5 Sekunden. Dabei erfolgt gemäß Verfahrensschritt 3.4 eine Bestromung der Bremsleuchten, gemäß Verfahrensschritt 3.6 eine Bestromung der Blinkerleuchten, gemäß Verfahrensschritt 3.8 eine Bestromung der Nebelschlussleuchten sowie gemäß Verfahrensschritt 3.10 eine Bestromung der Rückfahrleuchten.

Mit abgeschlossener Bestromung der Rückfahrleuchten gemäß Verfahrensschritt 3.10 ist die erfindungsgemäße Testsequenz beendet und das erfindungsgemäße Verfahren abgeschlossen. Verwenderseitig ist nunmehr nur noch die in Funktion befindliche Warnblinkeinrichtung des Zugfahrzeuges auszuschalten.

### Bezugszeichen

- 1: erster Verfahrensschritt
- 2: zweiter Verfahrensschritt
- 3: dritter Verfahrensschritt
- 3.1 bis 3.10: weitere Verfahrensschritte

## Patentansprüche

1. Verfahren zur zeitweisen Bestromung von Leuchten eines an ein Zugfahrzeug elektrisch anschließbaren Anhängers, bei dem die Leuchtenbestromung an dem Zugfahrzeug durch einen Verwender initialisiert wird, bei dem die Leuchten alsdann an die Stromversorgung des Zugfahrzeugs angeschlossen werden, indem die elektrische Anlage des Anhängers an das zugfahrzeugseitige Anhängeranschlussgerät angeschlossen wird, und bei dem die Leuchten der Reihe nach einzeln für ein vorgebbares Zeitintervall bestromt werden.

2. Verfahren nach Anspruch 1, **dadurch gekennzeichnet, dass** das Zeitintervall zwischen 1 Sekunde und 2 Sekunden, vorzugsweise 1,5 Sekunden beträgt.

3. Verfahren nach Anspruch 1 oder 2, **dadurch gekennzeichnet, dass** zwischen zwei aufeinander nachfolgende Leuchtenbestromungen ein Pausenintervall von 0,2 Sekunden bis 1,0 Sekunden, vorzugsweise 0,5 Sekunden vorgesehen ist.

4. Verfahren nach einem der vorhergehenden Ansprüche, **dadurch gekennzeichnet, dass** die Initialisierung der Leuchtenbestromung mittels Betätigung eines im Fahrgastraum des Zugfahrzeugs angeordneten Auslöseelements erfolgt.

5. Verfahren nach Anspruch 4, **dadurch gekennzeichnet, dass** als Auslöseelement der für eine Bedienung der Warnblinkeinrichtung vorgesehene Betätigungsschalter verwendet wird.

6. Verfahren nach einem der vorhergehenden Ansprüche, **dadurch gekennzeichnet, dass** nach einem Anschluss der Leuchten an die zugfahrzeugseitige Stromversorgung eine Bestromung der ersten Leuchte nach Ablauf eines Warteintervalls von 1 Sekunde bis 10 Sekunden, vorzugsweise von 5 Sekunden durchgeführt wird.

7. Verfahren nach einem der vorhergehenden Ansprüche, **dadurch gekennzeichnet, dass** eine Bestromung der Leuchten in einer vorgegebenen Reihenfolge automatisch durchgeführt wird.

8. Verfahren nach Anspruch 4, **dadurch gekennzeichnet, dass** eine Bestromung der Leuchten bei erneuter Betätigung des Auslöseelements unterbrochen wird.

## Claims

1. A method for temporally energizing lights of a trailer that can be electrically connected to the towing vehicle, in which method the energizing of the lights will be initialized by a user in the towing vehicle, in which the lights are then connected to the power supply of the towing vehicle by connecting the electric system of the trailer to the trailer connecting device on the side of the towing vehicle, and in which the lights are energized individually in sequence for a predeterminable time interval.

2. A method according to claim 1, **characterized in that** the time interval is comprised between 1 second and 2 seconds, and preferably takes 1.5 seconds.

3. A method according to claim 1 or 2, **characterized in that** a rest interval comprised between 0.2 seconds and 1.0 seconds, preferably taking 1.5 seconds, is provided between two successive light energizing operations.

4. A method according to one of the preceding claims, **characterized in that** the energizing of the lights is initialized by actuating a trigger element arranged in the passenger compartment of the towing vehicle.

5. A method according to claim 4, **characterized in that** the actuation switch provided for operating the hazard flasher is used as trigger element.

6. A method according to one of the preceding claims, **characterized in that** after the lights have been connected to the power supply of the towing vehicle, the first light will be energized after a waiting interval comprised between 1 second and 10 seconds, preferably 5 seconds, has expired.

7. A method according to one of the preceding claims, **characterized in that** an energizing operation of the lights will be automatically carried out in a predetermined order.

8. A method according to claim 4, **characterized in that** an energizing of the lights will be interrupted, if the trigger element is again operated.

## Revendications

1. Procédé d'alimentation électrique temporaire de feux d'une remorque susceptible d'être raccordée électriquement à un véhicule tracteur, dans lequel l'alimentation électrique de feux est initialisée par un utilisateur dans le véhicule tracteur, et dans lequel les feux sont ensuite raccordés à l'alimentation électrique du véhicule tracteur en raccordant le système électrique de la remorque à l'appareil de connexion de remorque du côté du véhicule tracteur, et dans lequel les feux sont individuellement alimentés en courant tour à tour pendant un intervalle de temps pré-déterminable.

2. Procédé selon la revendication 1, **caractérisé en ce que** l'intervalle de temps est compris entre 1 seconde et 2 secondes, de préférence il dure 1,5 secondes.

3. Procédé selon la revendication 1 ou la revendication 2, **caractérisé en ce qu'**un intervalle de repos compris entre 0,2 secondes et 1,0 secondes, de préférence de 0,5 secondes, est prévu entre deux alimentations successives en courant des feux.

4. Procédé selon l'une des revendications précédentes, **caractérisé en ce que** l'initialisation de l'alimentation en courant de feux est réalisée par moyen d'actionnement d'un élément de déclenchement disposé dans l'habitacle du véhicule tracteur.

5. Procédé selon la revendication 4, **caractérisé en ce qu'**un interrupteur de commande prévu pour actionner les feux de détresse est utilisé en tant que l'élément de déclenchement.

6. Procédé selon l'une des revendications précédentes, **caractérisé en ce qu'**après le raccordement des feux à l'alimentation électrique du véhicule tracteur, le premier feu sera alimenté en courant après l'écoulement d'un intervalle d'attente compris entre 1 seconde et 10 secondes, de préférence de 5 secondes.

7. Procédé selon l'une des revendications précédentes, **caractérisé en ce qu'**une alimentation en courant des feux sera automatiquement réalisée dans un ordre prédéterminé.

8. Procédé selon la revendication 4, **caractérisé en ce qu'**une alimentation en courant des feux sera interrompue dans le cas d'un nouvel actionnement de l'élément de déclenchement.
